# EUROPÄISCHE PATENTSCHRIFT

(11) **EP 2 672 919 B1**
(45) Veröffentlichungstag und Bekanntmachung des Hinweises auf die Patenterteilung: **11.03.2020**
(21) Anmeldenummer: 12703114.4
(22) Anmeldetag: 08.02.2012
(51) Int. Cl.: A61C 7/14

(54) **VERFAHREN ZUR HERSTELLUNG MINDESTENS EINES PATIENTENSPEZIFISCHEN, MODULAR AUFGEBAUTEN BRACKETS**
METHOD FOR PRODUCING AT LEAST ONE PATIENT-SPECIFIC MODULAR BRACKET
PROCÉDÉ DE FABRICATION D'AU MOINS UNE BAGUE ORTHODONTIQUE SPÉCIFIQUE AU PATIENT ET DE STRUCTURE MODULAIRE

(30) Priorität: 09.02.2011 DE 102011003892
(43) Veröffentlichungstag der Anmeldung: 18.12.2013
(73) Patentinhaber: DW LINGUAL SYSTEMS GMBH, 49152 Bad Essen (DE)
(72) Erfinder: VU, Hoang Viet-ha Julius, 59425 Unna (DE); WIECHMANN, Dirk, 49152 Bad Essen (DE)
(74) Vertreter: Taruttis, Stefan Georg
(86) Internationale Anmeldenummer: PCT/EP2012/052148
(87) Internationale Veröffentlichungsnummer: WO 2012/107501

(56) Entgegenhaltungen:
- EP-A2- 1 941 842

## Beschreibung

Die Erfindung betrifft ein Verfahren zur Herstellung mindestens eines patientenspezifischen, modular aufgebauten Brackets.

Für die kieferorthopädische Behandlung von Patienten mit festsitzenden Klammern werden Brackets auf die zu behandelnden Zähne des Patienten geklebt und durch einen Drahtbogen miteinander verbunden, so dass sie eine Anordnung von Brackets mit jeweils einem Schlitz (Slot) bilden, durch den ein Bogendraht geführt sein kann. Die Brackets weisen eine Auflage (Pad) zur Verbindung mit dem Zahn und einen Bracketkörper auf, der insbesondere in einem Schlitz den Drahtbogen aufnimmt.

Als Brackets können Standardbrackets verwendet werden, die nach gewissen Standardwerten normiert sind und somit für eine gewisse Bandbreite von Patienten verwendet werden können.

Es gibt aber auch die Möglichkeit, Brackets individuell für Patienten herstellen zu lassen, wie bspw. in EP1474064B1, EP07111572A1, US20020010568A1 und EP08103240 offenbart.

Die EP 1 941 842 A2 beschreibt die Herstellung eines Brackets, bei der zunächst ein Computermodell für ein Bracket mit Auflage an einem dreidimensionalen Modell der Zähne erzeugt wird, wobei die dreidimensionale Form der Auflage entsprechend der Zahnform erzeugt wird und diese virtuelle Auflage mit einem virtuellen Bracketkörper verbunden wird. Nach dem dreidimensionalen ComputerModell des vollständigen Brackets wird dann hergestellt

Während die Herstellung von Standardbrackets keine Schwierigkeiten bereitet, ist die Herstellung von vollständig individualisierten Brackets sehr aufwändig. In einer Variante stehen in einem Computer einzelne Bracketbestandteile, wie bspw. Haken (Hook), Flügel (Wing), Schlitz (Slot) und Auflage (Pad), zur Verfügung, die dann zu einem virtuellen Bracket zusammengesetzt werden, wobei dies in einem virtuellen Set-Up des Gebisses eines Patienten erfolgt. Das auf diese Weise erzeugte virtuelle Bracket wird an einen 3D-Drucker übermittelt, um damit ein reales Bracket herzustellen.

Bei Standardbrackets wird als nachteilig empfunden, dass sie keine Individualisierung für einen bestimmten Patienten aufweisen. Bei vollständig individualisierten Brackets wird die aufwändige Herstellung als nachteilig empfunden.

Aufgabe der vorliegenden Erfindung ist es daher, auf einfache Weise ein patientenspezifisches Bracket herzustellen.

### Allgemeine Beschreibung der Erfindung

Die Aufgabe wird durch ein Verfahren mit den Merkmalen von Anspruch 1 gelöst.

Das Verfahren betrifft insbesondere die Herstellung eines patientenspezifischen, modular aufgebauten Brackets mit einer Auflage und einem Bracketkörper durch
1a) Bereitstellen einer Rohauflagenbibliothek mit Rohauflagen,
1b) Bereitstellen mindestens einer Bracketkörperbibliothek von Bracketkörpern,
1c) Herstellen eines patientenspezifischen Modells der Dentition (Set-Ups), insbesondere aus Gips, von zu behandelnden Zähnen eines Oberkiefers und/oder eines Unterkiefers eines Patienten,
1d) Auswählen einer Rohauflage aus der Rohauflagenbibliothek für jeden zu behandelnden Zahn des Patienten,
1e) Bilden einer patientenspezifischen Klebefläche an jeder Rohauflage zur Herstellung einer Auflage mit patientenspezifischer Oberfläche, insbesondere durch Anordnen der Rohauflage in einem Abstand zum Modell der Dentition und Ausfüllen des Spalts, der sich über den Abstand erstreckt, mit Füllmaterial und Aushärten des Füllmaterials,
1f) Auswählen eines Bracketkörpers aus der Bracketkörperbibliothek für jede Auflage zum Verbinden jeweils eines Bracketkörpers mit einer Auflage
1g) Verbinden je einer Auflage mit dem zugehörigen Bracketkörper zur Herstellung eines Brackets für jeden zu behandelnden Zahn des Patienten.

Vorteilhaft werden die Bracketkörper der Bracketkörperbibliothek bereitgestellt durch:
2a) Bereitstellen eines Rohbracketkörpers mit einem Distanzabschnitt,
2b) Festlegen eines ersten Parameters zum Durchtrennen des Distanzabschnitts, einem Abstand einer entstehenden Schnittfläche des Distanzabschnitts vom Schlitz, um eine geeignete Höhe des Bracketkörpers festzulegen,
2c) Festlegen eines zweiten Parameters zum Durchtrennen des Distanzabschnitts, einem Schneidwinkel zu einer mesio-distalen-Achse, um einen geeigneten Torquewert des Bracketkörpers festzulegen,
2d) Festlegen eines dritten Parameters zum Durchtrennen des Distanzabschnitts, einem Schneidwinkel zu einer okklusal-gingivalen-Achse, um einen geeigneten Rotationswert des Bracketkörpers festzulegen,
2e) Durchtrennen des Distanzabschnitts entsprechend der drei festgelegten Parameter, insbesondere mittels einer Säge, wodurch ein Bracketkörper hergestellt ist.

Vorteilhaft werden die Rohauflagen der Rohauflagenbibliothek bereitgestellt durch:
3a) Bereitstellen eines vorzugsweise ebenen Auflagenmaterialabschnitts,
3b) Bereitstellen einer Stanze mit mindestens einem Stanzstempel zum Ausstanzen mindestens einer Rohauflage aus dem Auflagenmaterialabschnitt,
3c) Ausstanzen mindestens einer Rohauflage aus dem Auflagenmaterialabschnitt mit Hilfe der Stanze.

Bevorzugt werden die Rohbracketkörper durch ein MIM- oder ein selektives Laserschmelzverfahren (Selective-Laser-Melting-Verfahren) bereitgestellt.

Der Auflagenmaterialabschnitt und/oder die Rohbracketkörper werden mit Vorteil aus einem biokompatiblen Metall oder einer biokompatiblen Legierung, insbesondere Titan, Gold, Silber oder rostfreiem Stahl oder einer Kobalt-Chrom-Legierung, bereitgestellt.

Das Verbinden jeder Auflage mit seinem zugehörigen Bracketkörper erfolgt vorteilhaft mittels Kleben oder Schweißen.

Das Bilden einer patientenspezifischen Klebefläche an einer Rohauflage im Schritt 1e) erfolgt bevorzugt durch Verfüllen eines Spalts zwischen der Rohauflage und dem zugehörigen Zahn im Set-Up mit einem Füllmaterial, insbesondere aus Kunststoff, um einen Formschluss der Klebefläche mit dem klinischen Zahn des Patienten zu ermöglichen.

Mindestens zwei Parameter, insbesondere der zweite und der dritte, werden mit Vorteil in den Schritten 2b) bis 2d) jeweils in einem vorbestimmten Intervall mit vorbestimmten Intervallschritten variiert, um die Bracketkörperbibliothek zu erstellen, in der Bracketkörper mit den jeweiligen verschiedenen Parameterwerten angeordnet sind.

Im Schritt 1a) werden bevorzugt in der Rohauflagenbibliothek jeweils an einen bestimmten Zahn vorkonfektionierte Rohauflagen bereitgestellt, bspw. in mindestens einem, dem Ausstanzen folgenden Prägeschritt vorkonfektionierte, insbesondere an einen jeweiligen Zahn eines Oberkiefers und/oder eines Unterkiefers vorkonfektionierte Rohauflagen.

Das Vorkonfektionieren umfasst bevorzugt ein Anpassen der bukkalen/lingualen Umfangskontur der mindestens einen Rohauflage, um diese Umfangskontur der Rohauflage an eine bestimmte Zahngröße oder -form anzupassen.

Das Vorkonfektionieren umfasst bevorzugt ein Umbiegen von ausgewählten Abschnitten einer Rohauflage, insbesondere das Umbiegen von mesialen und/oder distalen Abschnitten einer Rohauflage, um mesiale und/oder distale Flügelabschnitte der Rohauflage zu bilden, die den zugehörigen Zahn mindestens abschnittsweise umgreifen.

Das Vorkonfektionieren umfasst mit Vorteil ein Umbiegen eines okklusalen Abschnitts einer Rohauflage, der folgend auf dem zugehörigen Zahn okklusal aufliegt.

Das Vorkonfektionieren umfasst bevorzugt das Ausbilden von lingualen/bukkalen Protrusionen bei mindestens einer Rohauflage, um es bspw. an eine linguale konkave/konvexe Struktur eines bestimmten Zahns anzupassen.

Mit Vorteil erfolgt ein manuelles Anpassen der im Schritt 1d) ausgewählten Rohauflage an seinen zugehörigen Zahn, wobei das Anpassen ein Anpassen der Form und/oder der Größe der Rohauflage umfassen kann.

Vorteilhaft werden mindestens zwei verschiedene Rohbracketkörper bereitgestellt, die jeweils mindestens einem bestimmten Zahn zugeordnet sind, insbesondere acht, d.h. für jeden Zahn (1er bis 8er) einen Rohbracketkörper, und im Schritt 1b) werden die Bracketkörperbibliotheken davon bereitgestellt.

Die Brackets werden bevorzugt in einem Malokklusionsmodell des Patienten jeweils auf ihrem zugehörigen, zu behandelnden Zahn positioniert und dann wird ein Übertragungstablett erstellt.

Weiter zeichnet sich das Verfahren durch die Auswahl einer Kombination aus Bracketkörper und Auflage aus jeweils einer Bibliothek vorgefertiger Bracketkörper bzw. Auflagen aus, insbesondere mit der Verbindung eines Bracketkörpers, dessen Distanzabschnitt eine Schnittfläche aufweist, die nach den drei Parametern angeordnet ist, mit der Auflage, deren patientenspezifische Fläche durch ein gehärtetes Füllmaterial gebildet ist, das durch Kontakt mit dem Modell der Dentition geformt ist. Der Bracketkörper weist bevorzugt eine durch einen Distanzabschnitt beabstandete Schnittfläche auf, die durch Durchtrennen, insbesondere Sägen erzeugt ist. Der Distanzabschnitt beabstandet die Schnittfläche vom Schlitz des Bracketkörpers und weist eine Länge auf, die als erster Parameter eine geeignete Höhe des Bracketkörpers festlegt. Die Schnittfläche ist als zweitem Parameter in einem Schneidwinkel zur mesio-distalen Achse angeordnet und legt einen geeigneten Torquewert des Bracketkörpers fest. Des Weiteren ist die Schnittfläche als drittem Parameter in einem Schneidwinkel zur okklusal-gingivalen Achse angeordnet, der einen geeigneten Rotationswert des Bracketkörpers festlegt. Die Schnittfläche ist daher durch die drei Parameter festgelegt. Durch Verbindung der Schnittfläche des Distanzabschnitts des Bracketkörpers mit der Auflage, die insbesondere eine ebene Fläche, bevorzugt eine konstante Materialdicke aufweist, wird die Anordnung des Bracketkörpers zur Auflage durch die drei Parameter festgelegt, und damit wird auch die Anordnung des Schlitzes im Bracketkörper angepasst für die drei Parameter auf der Auflage festgelegt.

### Genaue Beschreibung der Erfindung

Weitere Merkmale, Einzelheiten und Vorzüge der Erfindung ergeben sich aus den Ansprüchen und der nachfolgenden Beschreibung bevorzugter Ausführungsformen sowie anhand der Zeichnung. Es zeigen:
Fig. 1 mehrere Ansichten einer Rohauflage für den Zahn 21,
Fig. 2 mehrere Ansichten einer Rohauflage für den Zahn 23,
Fig. 3 mehrere Ansichten einer Rohauflage für den Zahn 27,
Fig. 4 mehrere Ansichten einer Rohauflage für den Zahn 35,
Fig. 5 mehrere Ansichten einer Rohauflage für den Zahn 37,
Fig. 6 mehrere Ansichten eines Rohbracketkörpers für den Zahn 1 des Oberkiefers (OK 1er),
Fig. 6a mehrere Ansichten eines Bracketkörpers, hergestellt aus dem Rohbracketkörper der Fig.6,
Fig. 7 mehrere Ansichten eines Rohbracketkörpers für den (Zahn 6 des Ober- oder Unterkiefers) OK oder UK 6er,
Fig. 8 mehrere Ansichten eines Rohbracketkörpers für den OK oder UK 7er,
Fig. 8a mehrere Ansichten eines Bracketkörpers, hergestellt aus dem Rohbracketkörper der Fig. 8,
Fig. 9 eine perspektivische Ansicht eines Ziel-Set-Ups, wobei eine Rohauflage an einem Zahn angeordnet ist und ein Spalt zwischen beiden mit Kunststoff verfüllt ist,
Fig. 10 eine perspektivische Ansicht eines Zahns, an den ein fertiges Bracket herangeführt wird,
Fig. 11 eine Draufsicht auf eine Rohauflagenbibliothek und
Fig. 12 eine Draufsicht auf eine Bracketkörperbibliothek.

Zunächst werden ein Auflagenmaterialstreifen (100m lang, 5cm breit und 0,4mm dick) aus rostfreiem Stahl sowie eine Stanze mit einem Stanzstempel bereitgestellt, um mit Hilfe der Stanze Rohauflagen aus dem Auflagenmaterialstreifen auszustanzen. Die Stanze stanzt aus einem eingelegten Auflagenmaterialabschnitt des Auflagenmaterialstreifens mehrere gleiche Rohauflagen aus, wobei die bukkale/linguale Umfangskontur derselben an den Zahn angepasst ist, für den die Rohauflage hergestellt wird. Anstelle eines Auflagenmaterialstreifens ist es alternativ möglich, auch einen Auflagenmaterialbogen zu verwenden.

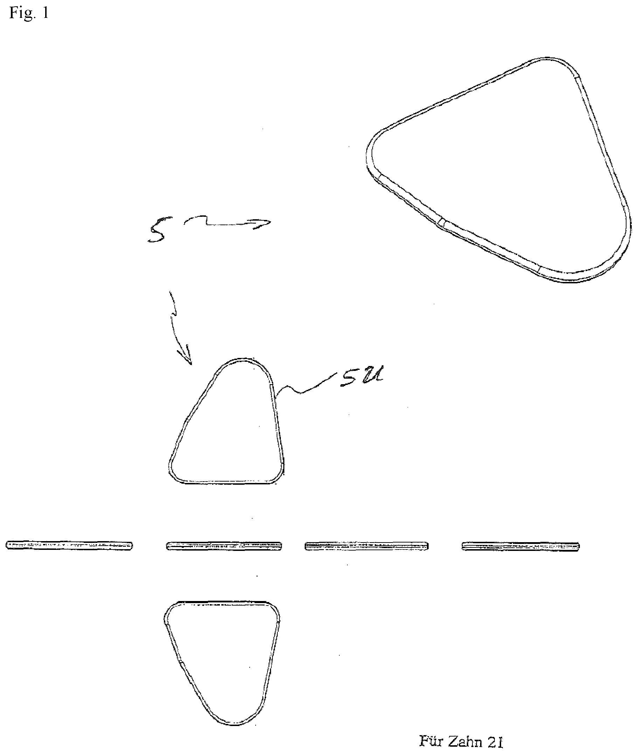

In Fig. 1 sind die sechs Seitenansichten sowie eine perspektivische Ansicht einer Rohauflage 5 für den Zahn 21 gezeigt, das auf diese Weise hergestellt wurde. Die Rohauflage 5 ist eben und weist eine konstante Materialdicke über die gesamte Fläche auf. Die bukkale/linguale Umfangskontur 5U weist nahezu die Form eines Dreiecks auf, wodurch die Rohauflage 5 gut an den Zahn 21 angepasst ist. Die beim Ausstanzen entstandenen Kanten der bukkalen/lingualen Umfangskontur 5U wurden in einem folgenden Prägeschritt beseitigt, wodurch sich die abgerundeten Seitenflächen dieser Umfangskontur 5U ergeben.

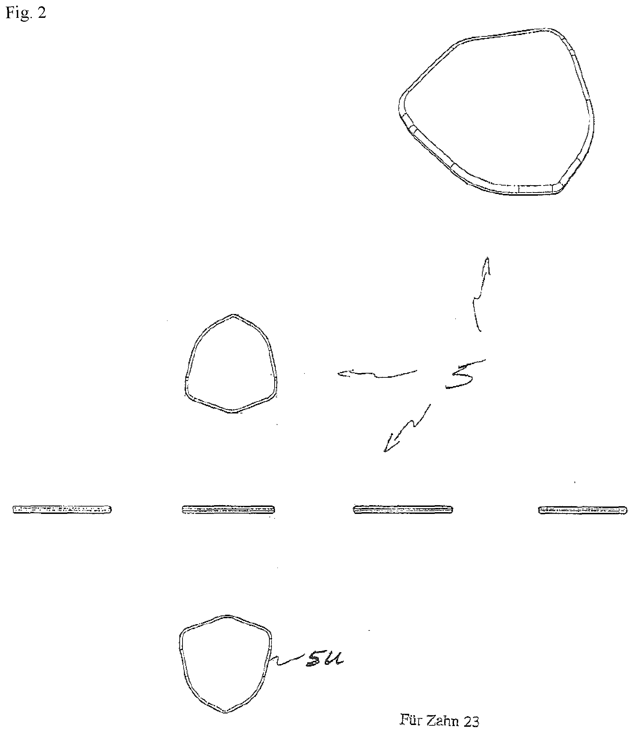

Analog zeigt die Fig. 2 eine nach demselben Verfahren hergestellte Rohauflage 5 für den Zahn 23, wobei sich diese Rohauflage 5 von dem der Fig. 1 lediglich durch die andere Form der bukkalen/lingualen Umfangskontur 5U unterscheidet.

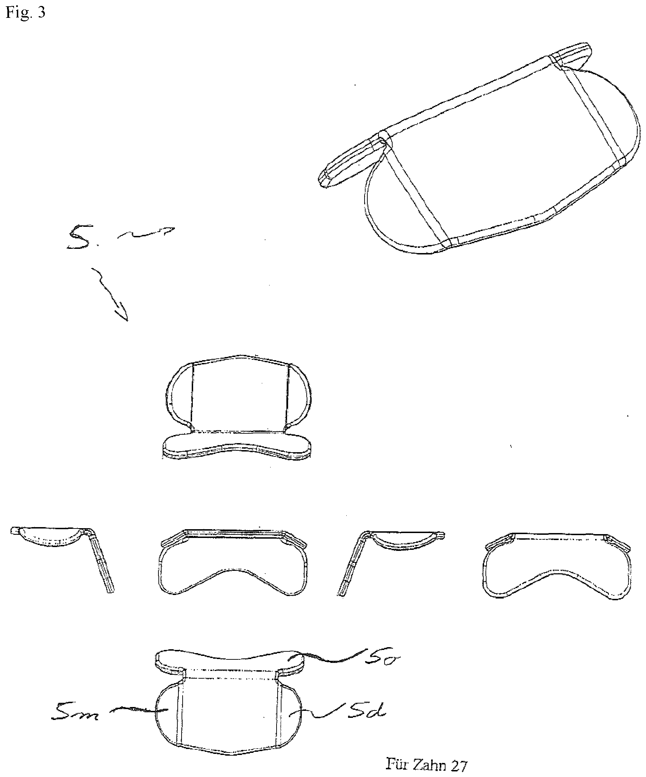

Figur 3 zeigt die sechs Seitenansichten sowie eine perspektivische Ansicht einer Rohauflage 5 für den Zahn 27. Die Rohauflage 5 wurde nach demselben Verfahren, wie unter Bezug auf die Fig. 1 und 2 beschrieben, hergestellt, jedoch wurden noch zwei weitere Biegeschritte durchgeführt. In einem ersten Biegeschritt wurden in einer Presse mit geeignetem Biegewerkzeug ein mesialer 5m und ein distaler 5d Flügelabschnitt durch Umbiegen gebildet. In einem zweiten Biegeschritt wurde in einer Presse mit geeignetem Biegewerkzeug ein okklusaler Abschnitt 5o der Rohauflage 5 gebildet. Dieser okklusale Abschnitt 5o liegt im eingesetzten Zustand beim Patienten okklusal auf dem Zahn 27 auf.

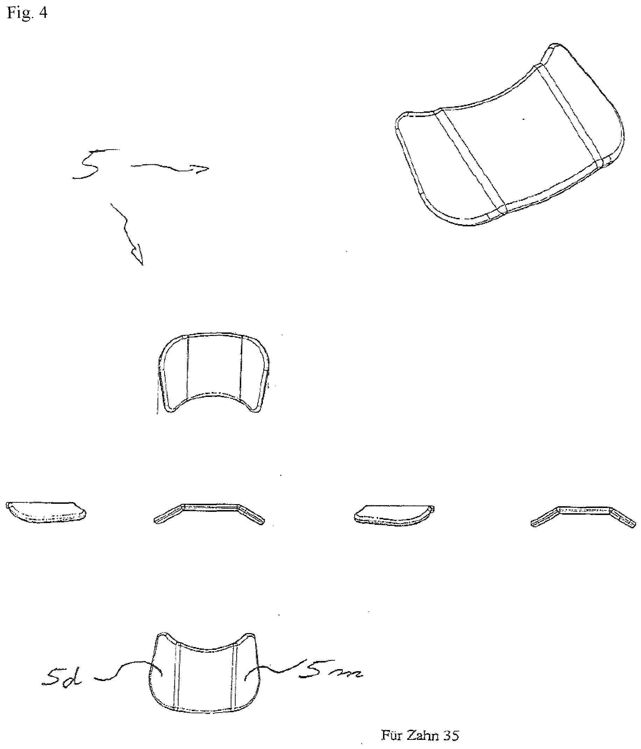

Figur 4 zeigt die sechs Seitenansichten sowie eine perspektivische Ansicht einer Rohauflage 5 für den Zahn 35. Die Rohauflage 5 wurde nach demselben Verfahren, wie unter Bezug auf die Fig. 1 und 2 beschrieben, hergestellt, jedoch wurden in einem weiteren Biegeschritt ein mesialer 5m und ein distaler 5d Flügelabschnitt gebildet.

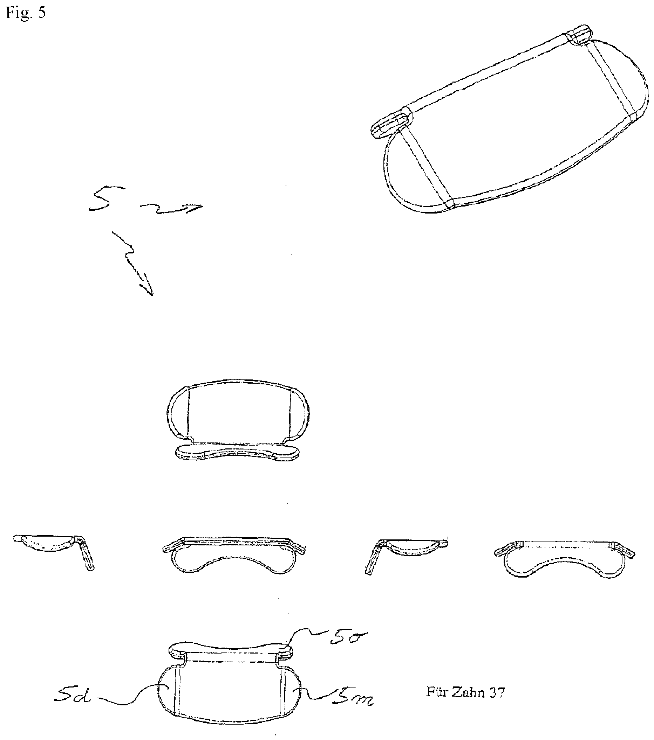

Figur 5 zeigt die sechs Seitenansichten sowie eine perspektivische Ansicht einer Rohauflage 5 für den Zahn 37. Die Rohauflage 5 wurde nach demselben Verfahren, wie unter Bezug auf die Fig. 1 und 2 beschrieben, hergestellt, jedoch wurden noch zwei weitere Biegeschritte durchgeführt, wie zuvor unter Bezug auf Fig. 3 beschrieben: In einem ersten Biegeschritt wurden in einer Presse mit geeignetem Biegewerkzeug ein mesialer 5m und ein distaler 5d Flügelabschnitt durch Umbiegen gebildet. In einem zweiten Biegeschritt wurde in einer Presse mit geeignetem Biegewerkzeug ein okklusaler Abschnitt 5o der Rohauflage 5 gebildet. Dieser okklusale Abschnitt 5o liegt im eingesetzten Zustand beim Patienten okklusal auf dem Zahn 37 auf.

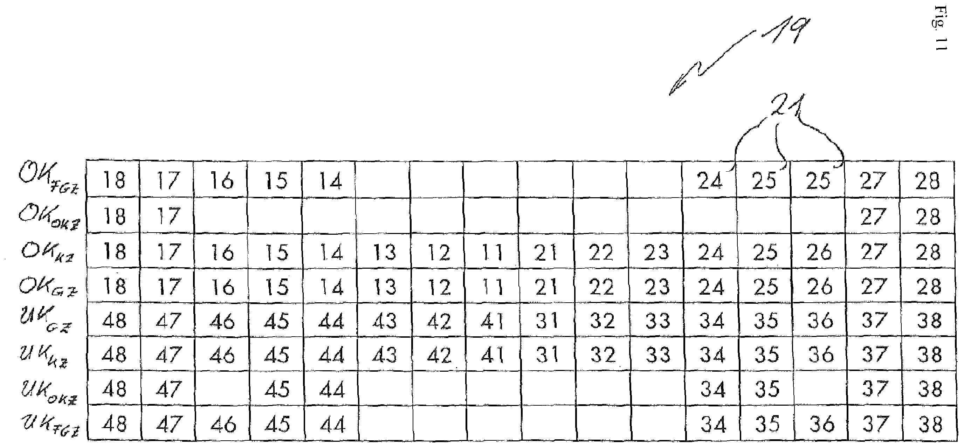

Die auf diese Weise hergestellten Rohauflagen 5 werden in eine Rohauflagenbibliothek 19 einsortiert, die in Fig. 11 dargestellt ist. Die Rohauflagenbibliothek 19 umfasst 16 mal 8 Rohauflagenbehälter 21, die matrixartig angeordnet sind. In der Reihe OK_{GZ} und UK_{GZ} sind jeweils 16 Rohauflagenbehälter 21, d.h. für jeden Zahn des Oberkiefers und des Unterkiefers ist ein Rohauflagenbehälter 21 vorgesehen. Die Rohauflagenbehälter 21 sind analog zu dem FDI-Zahnschema in der Zahnmedizin angeordnet: Von dem 8er links beginnend über die 1er nach rechts bis zu dem 8er der anderen Gesichtshälfte. Dementsprechend sind die Rohauflagenbehälter mit 18 über 11 und 21 bis 28 bezeichnet, respektive mit 48 über 41 und 31 bis 38. In jedem dieser Rohauflagenbehälter 21 befinden sich die zu dem jeweiligen Zahn gehörenden bzw. daran angepassten Rohauflagen 5.

In der Reihe OK_{GZ} und UK_{GZ} sind die Rohauflagen 5 für den Oberkiefer bzw. den Unterkiefer mit großen Zähnen. In der Reihe OK_{KZ} und UK_{KZ} sind die Rohauflagen 5 für den Oberkiefer bzw. den Unterkiefer mit kleinen Zähnen. In der Reihe OK_{OKZ} und UK_{OKZ} sind die Rohauflagen 5 mit okklusalen Abschnitten 5o für den Oberkiefer bzw. den Unterkiefer mit kleinen Zähnen, vorliegend nur für die Zähne 17, 18, 28, 27 sowie 34, 35, 37, 38, 44, 45, 47 und 48. In der Reihe OK_{FGZ} und UK_{FGZ} sind die Rohauflagen 5 mit Flügelabschnitten 5m, 5d für den Oberkiefer bzw. den Unterkiefer mit großen Zähnen, vorliegend nur für die Zähne 14, 15 , 16, 17, 18, 24, 25, 26, 27, 28 sowie 34, 35, 36, 37, 38, 44, 45, 46, 47 und 48.

Um nun eine patientenspezifische Auflage herzustellen, wird wie folgt weiter verfahren: Von einem Oberkiefer und Unterkiefer eines Patienten wird jeweils ein Abdruck genommen und mit Hilfe desselben ein Gipsmodell erstellt. Die Gipsmodelle werden in einen Artikulator einartikuliert bzw. angeordnet, der die relative Lage der Kiefer zueinander widerspiegelt (Malokklusionsmodelle). Aus diesem Malokklusionsmodell wird das Ziel-Set-Up gefertigt, das die geplante Situation am Ende der Behandlung darstellt. Um dieses zu erstellen, werden die Zähne aus den Malokklusionsmodellen des Patienten einzeln ausgeschnitten und dann in der zu erreichenden Zielsituation wieder zusammengesetzt, wodurch das Ziel-Set-Up entsteht.

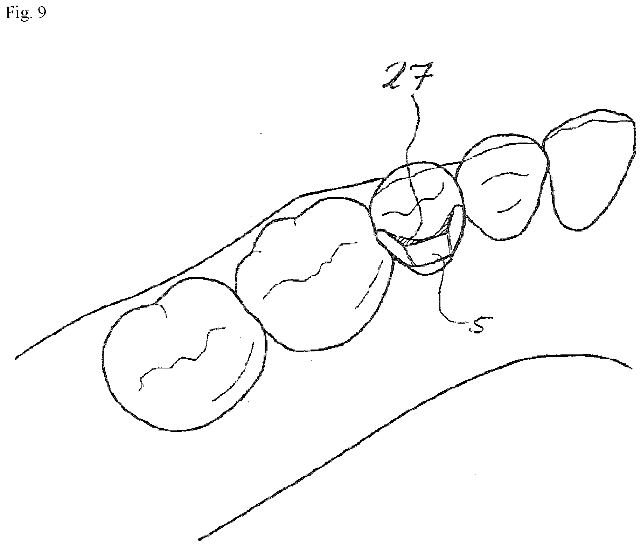

Für die zu behandelnden Zähne wird nun jeweils eine geeignete Rohauflage 5 aus der Rohauflagenbibliothek 19 entnommen. Die entnommenen Rohauflagen 5 werden auf die zugehörigen Zähne des Gipsmodells (Ziel-Set-Up) evtl. noch von Hand weiter angepasst, wobei dabei die Form und/oder die Größe angepasst werden kann, aber auch noch Biegungen von Hand durchgeführt werden können. Anschließend werden die Rohauflagen 5 jeweils an den zugehörigen Zahn im Ziel-Set-Up gehalten und ein Spalt 27 zwischen dem Zahn und der Rohauflage 5 wird mit einem Füllmaterial aus Kunststoff verfüllt, wie in Fig. 9 gezeigt. Auf diese Weise erhält die Rohauflage 5 eine patientenspezifische Klebefläche 3K und wird dadurch zu einer Auflage 3. Diese patientenspezifische Klebefläche 3K kann später formschlüssig auf den Zahn des Patienten aufgesetzt werden und mit Hilfe eines Klebers fest mit diesem verbunden werden.

Die auf diese Weise hergestellten patientenspezifischen Auflagen 3 werden nun noch jeweils mit einem patientenspezifischen Bracketkörper 7 verbunden, der einer Bracketkörperbibliothek 23 entnommen wird, die analog zu der Rohauflagenbibliothek aufgebaut ist, wie folgend beschrieben.

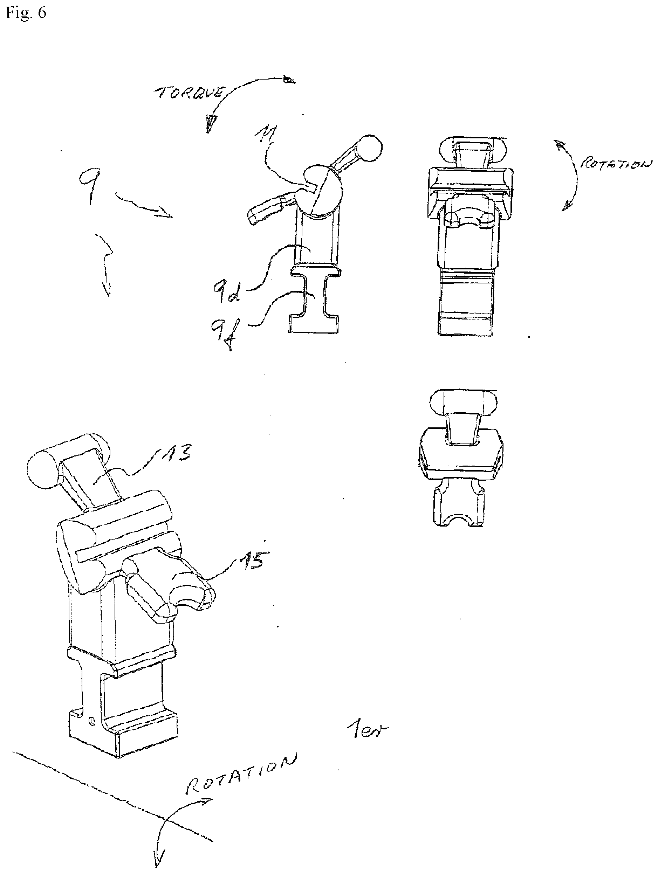

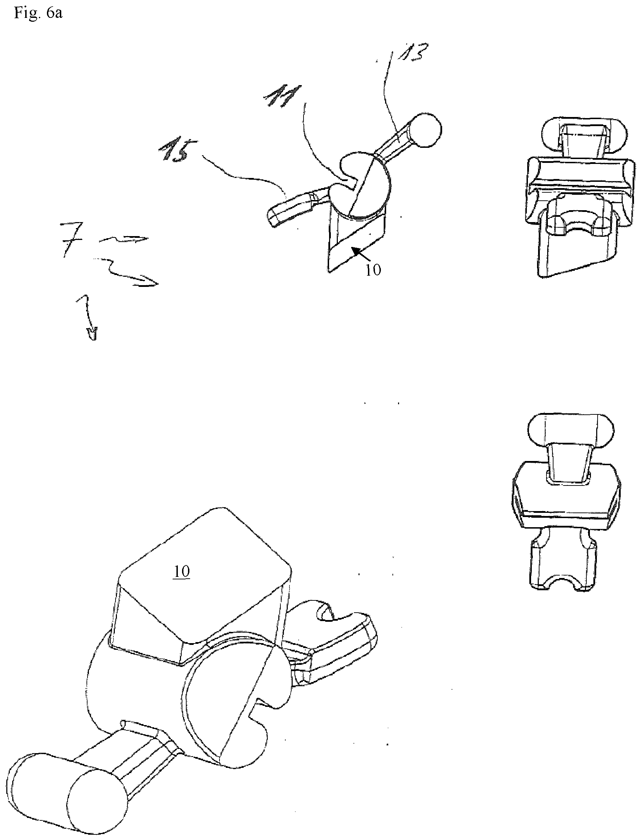

Fig. 6 zeigt verschiedene Ansichten eines Rohbracketkörpers 9 für einen OK 1er, wobei dieser einen Fixierabschnitt 9f, einen Distanzabschnitt 9d, einen Schlitz 11, einen Haken 13 und einen Flügel 15 aufweist. Fig. 6a zeigt die Schnittfläche 10, die entsprechend der drei Parameter angeordnet ist.

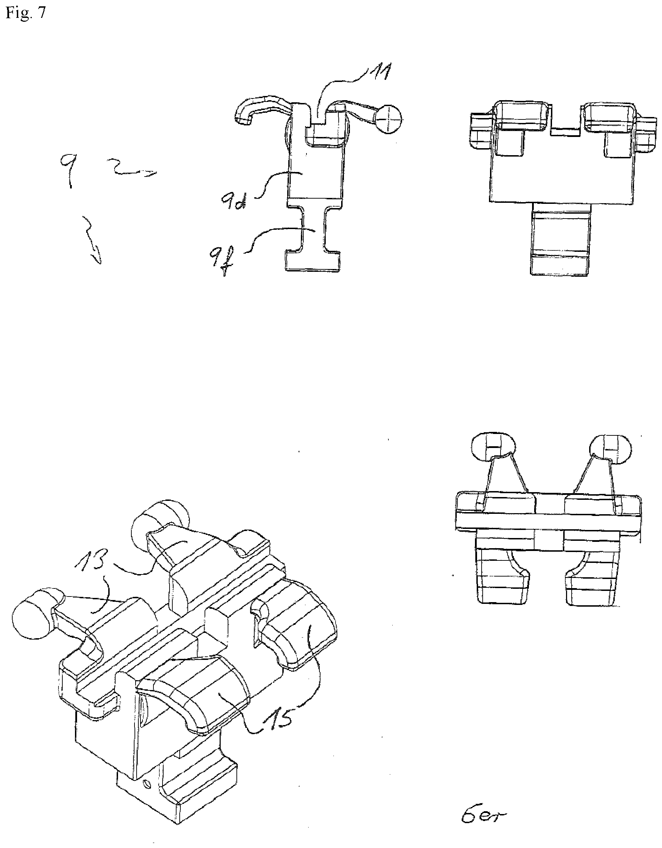

Fig. 7 zeigt verschiedene Ansichten eines Rohbracketkörpers 9 für einen Oberkiefer (OK) oder Unterkiefer (UK) Zahn 6 (6er), wobei dieser einen Fixierabschnitt 9f, einen Distanzabschnitt 9d, einen Schlitz 11, zwei Haken 13 und zwei Flügel 15 aufweist.

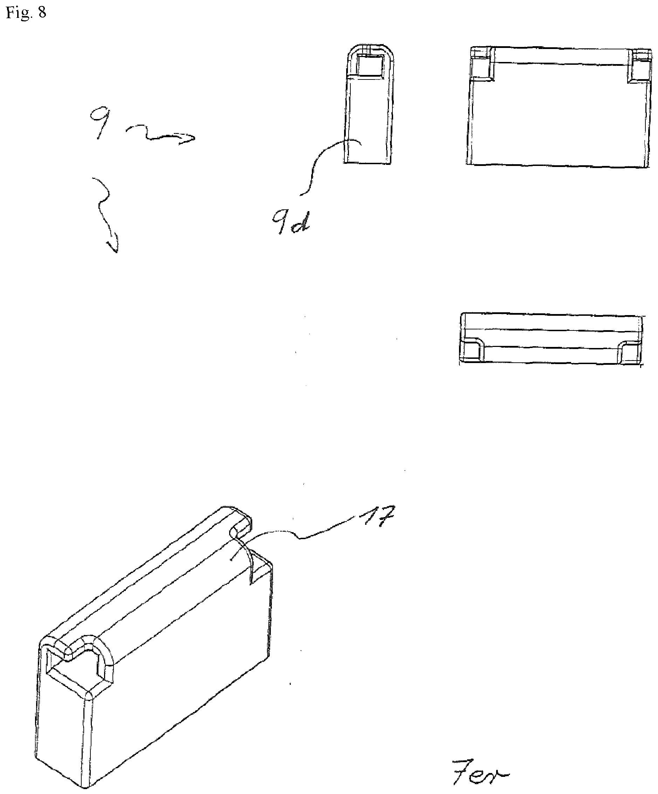

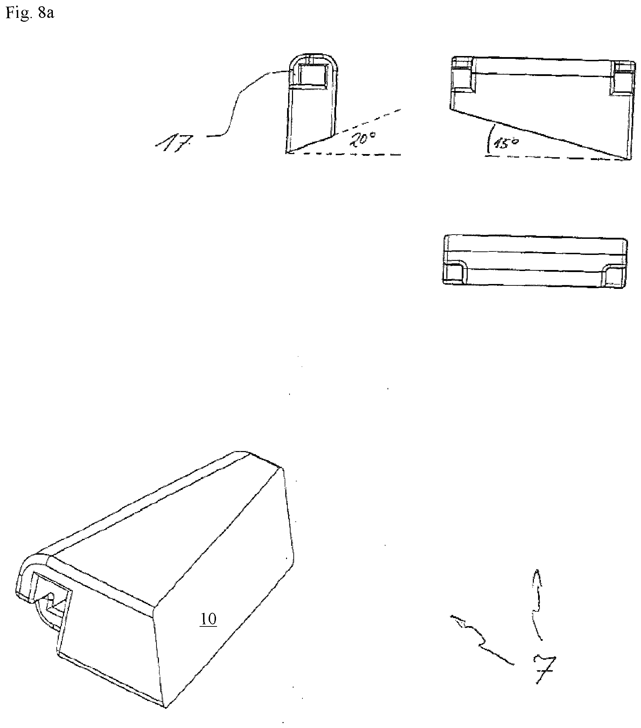

Fig. 8 zeigt verschiedene Ansichten eines Rohbracketkörpers 9 in Form eines Röhrchens 17 für einen Oberkiefer (OK) oder Unterkiefer (UK) Zahn 7 (7er), wobei dieser ebenfalls einen Distanzabschnitt 9d aufweist.

Die Rohbracketkörper 9 wurden in einem MIM-Verfahren hergestellt (alternativ in einem Selective-Laser-Melting-Verfahren) und bestehen aus einer Kobalt-Chrom-Legierung (alternativ bspw. aus rostfreiem Stahl). Die Haken 13 und Flügel 15 weisen jeweils an ihrem dem Schlitz 11 zugewandten Ende eine Materialverjüngung auf, damit sie jeweils noch z.B. von Hand in eine geeignete Winkellage um den Schlitz 11 gebogen werden können.

Um einen optimalen Schlitz 11 für die Behandlung zur Verfügung zu haben, werden die Rohbracketkörper 9 der Figuren 6 und 7 mit ihren Fixierabschnitten 9f an einem Träger befestigt. An dem Träger können ca. 100 Stück befestigt werden. Der Träger mit den Rohbracketkörpern 9 wird in ein geeignetes Flüssigkeitsbad getaucht, in dem der Schlitz 11 eines jeden Rohbracketkörpers 9 mit Hilfe eines Drahterosionsverfahrens nachgeschnitten wird. Dies kann auch über mehrere Durchläufe erfolgen (Schlichten). Auf diese Weise entsteht ein sehr präziser Schlitz 11 mit einer geringen Fehlertoleranz von der Norm.

Der Rohbracketkörper der Fig. 8 weist keinen Fixierabschnitt auf, weil er keinen Schlitz aufweist, der für die Behandlung hochpräzise gefertigt sein muss.

Nach diesem Schritt werden die Rohbracketkörper 9 der Figuren 6 bis 8 mit ihrem schlitzseitigen Ende in einer entsprechenden Negativform (zu diesem Ende) fixiert, wobei alternativ eine Fixierung am gegenüberliegenden Ende möglich ist. Mit Hilfe einer Säge wird der Distanzabschnitt 9d der jeweiligen Rohbracketkörper 9 unter verschiedenen Winkeln durchtrennt. Beim Durchtrennen können drei Parameter eingestellt werden:
Der erste Parameter ist ein Abstand der entstehenden Schnittfläche vom Schlitz 11. Je kleiner dieser Abstand gewählt werden kann, umso weniger spürt ein Patient das Bracket.

Der zweite Parameter ist ein Winkel um die Längsachse des Schlitzes 11 (mesio-distale-Achse). Je nach Abweichung des Schnittwinkels von einem durchschnittlichen Standardwert wird mehr oder weniger Torque aufgebracht, s. Fig. 6 zur Nomenklatur.

Der dritte Parameter ist ein Winkel um eine Senkrechte zur Längsachse des Rohbracketkörpers 9 (okklusale-gingivale-Achse). Je nach Abweichung des Schnittwinkels von einem durchschnittlichen Standardwert wird mehr oder weniger Rotation aufgebracht, s. Fig. 6 zur Nomenklatur.

Für einen Rohbracketkörper 9 werden nun diese drei Parameter festgelegt und der Distanzabschnitt 9d mit einer Säge entsprechend durchtrennt, wodurch sich ein Bracketkörper 7 ergibt. Fig. 6a zeigt den Rohbracketkörper 9 der Fig. 6, bei dem der Distanzabschnitt bzgl. Torque bei 55° und bzgl. Rotation bei 15° durchtrennt wurde, wodurch sich der Bracketkörper 7 der Fig. 6a ergibt. Fig. 8a zeigt den Rohbracketkörper 9 der Fig. 8, bei dem der Distanzabschnitt bzgl. Torque bei 20° und bzgl. Rotation bei 15° durchtrennt wurde. Fig. 8a zeigt die entsprechend der drei Parameter angeordnete Schnittfläche 10.

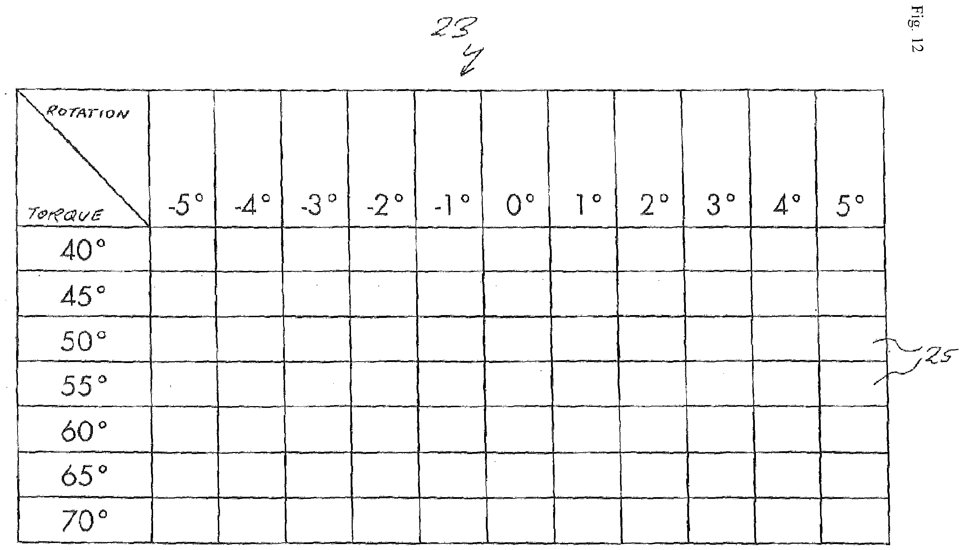

Die auf diese Weise erhaltenen Bracketkörper 7 werden in Bracketkörperbehälter 25 einer Bracketkörperbibliothek 23 einsortiert (Fig. 12), wobei für jeden Rohbracketkörper 9 der Figuren 6 bis 8 jeweils eine Bracketkörperbibliothek zur Verfügung steht. Mit anderen Worten hat der Rohbracketkörper 9 der Fig. 6 seine eigene Bracketkörperbibliothek, genauso wie der der Fig. 7 und 8.

Fig. 12 zeigt eine Bracketkörperbibliothek 23, die analog zu der Rohauflagenbibliothek aufgebaut ist und mit Bracketkörpern 7 gefüllt ist. Die Bracketkörper 7 sind bzgl. Rotation von -5° bis +5° in 1°-Schritten unterteilt und bzgl. Torque von 40° bis 70° in 5°-Schritten unterteilt. Natürlich können hier andere Intervallgrenzen sowie andere Intervallschritte verwendet werden, insbesondere auch in Abhängigkeit von dem Rohbracketkörper 9, d.h. für den Rohbracketkörper 9 der Fig. 6 können andere Intervallgrenzen und andere Intervallschritte verwendet werden als für den der Fig. 7. Die Bracketkörper 7 bilden zusammen mit der Auflage 3 ein fertiges Bracket 1.

Das Verfahren zur Fertigung eines patientenspezifischen Brackets wird wie folgt fortgesetzt: An den zu behandelnden Zähnen im Set-Up ist bereits eine patientenspezifische Auflage 3 befestigt. Für jede Auflage 3 wird nun aus der Bracketkörperbibliothek ein geeigneter Bracketkörper 7 entnommen und an seiner jeweiligen Auflage 3 festgeklebt. Vorteilhaft werden die Bracketkörper 7 über einen "mechanischen Finger" an die jeweilige Auflage 3 geführt und dann daran festgeklebt.

Von dem auf diese Weise fertig gestellten Bracket-Set-Up wird nun ein 2dim-Scan des OK- und/oder UK-Modells aus der entsprechenden cranialen bzw. caudalen Richtung (Draufsicht) vorgenommen, um an Hand dieser Daten einen entsprechenden Drahtbogen mit Hilfe einer Drahtbiegemaschine zu biegen.

Anschließend werden die Gipsmodelle in einem Wasserbad gewässert, wodurch die Auflagen mit den daran festgeklebten Bracketkörpern gelöst werden, die folgend mit Hilfe eines Lasers aneinander fest geschweißt werden.

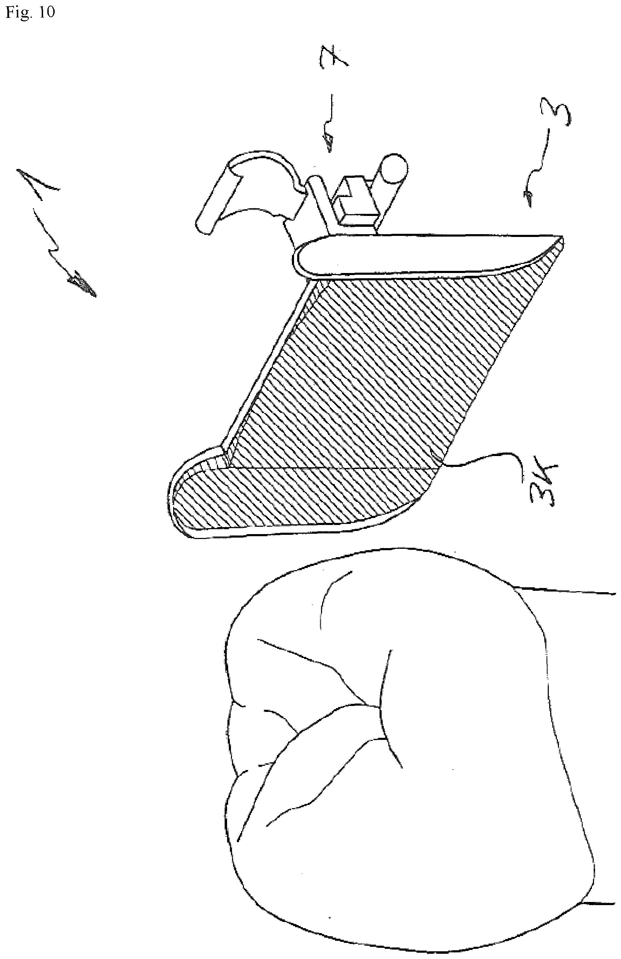

Die auf diese Weise hergestellten Brackets 1 werden auf ein Gipsmodell des Patienten (Malokklusionsmodell) gesetzt, s. Fig. 10, und dort fixiert, um ein Übertragungstablett aus Silikon herzustellen.

Für die Zähne 21, 23, 27, 35 und 37 wurde in den Figuren 1 bis 5 jeweils eine Rohauflage 5 vorgestellt. Allgemein ist es möglich, für jeden Zahn des Ober- und/oder Unterkiefers jeweils eine speziell auf diesen Zahn angepasste Rohauflage 5 zu entwickeln. Alternativ ist es möglich, eine Rohauflage 5 für mehrere Zähne zu verwenden, bspw. eine Rohauflage 5 für die Zähne 32, 31, 41 und 42 zu verwenden.

Die Rohauflagenbibliothek 19 gemäß Fig. 11 umfasst in jeder Reihe 16 Rohauflagenbehälter 21, in denen jeweils für einen Zahn Rohauflagen 5 angeordnet sind. Es sind somit vom Zahn 8 (8er) der einen Seite bis zum 8er der anderen Seite jeweils Rohauflagen 5 vorgesehen. Die Rohauflagenbibliothek 19 umfasst in einer alternativen Ausführungsform in jeder Reihe 14 Rohauflagenbehälter 21, in denen jeweils für einen Zahn (vom 7er bis zum 7er) Rohauflagen 5 angeordnet sind. Es sind somit vom 7er der einen Seite bis zum 7er der anderen Seite jeweils Rohauflagen 5 vorgesehen.

Im Rahmen der vorliegenden Erfindung wird unter einer matrixartigen Anordnung eine Anordnung in Zeilen und Spalten verstanden.

Die Bracketkörperbibliothek 23 umfaßt Bracketkörperbehälter 25 mit darin angeordneten Bracketkörpern 7. Die Bracketkörperbehälter 25 bzw. die darin angeordneten Bracketkörper 7 sind dabei nach Parameterwerten der drei Parameter (Abstand Schnittfläche - Schlitz, Winkel mesiale-distale-Achse, Winkel okklusale-gingivale-Achse) sortiert. Allgemein ist es möglich, in einer Bracketkörperbibliothek 23 eines Rohbracketkörpers 9 alle drei Parameter zu variieren. So ist es bspw. möglich, die Bracketkörperbibliothek 23 der Fig. 12 mit den gleichen Werten für Torque und Rotation erneut herzustellen, wobei jedoch der dritte Parameter (der Abstand Schnittfläche - Schlitz) variiert ist, bspw. um 1mm vergrößert oder verkleinert. Auf diese Weise gäbe es die Bracketkörperbibliothek 23 der Fig. 12 zweimal: einmal mit einem größeren Abstand und einmal mit einem kleineren Abstand, wodurch eine neue Bracketkörperbibliothek 23 gebildet ist. Die matrixartige Anordnung der Fig. 12 wird somit in die dritte Dimension erweitert, in der der weitere Parameter variiert ist. Diese allgemeine Version ist in der Praxis in der Regel nicht notwendig: Da der Abstand Schnittfläche - Schlitz immer so gering wie möglich sein soll, damit das entstehende Bracket 1 den Patienten so wenig wie möglich stört, kann die Bracketkörperbibliothek 23 der Fig. 12 ausreichend sein, bei der der Abstand Schnittfläche - Schlitz so gering wie möglich ist.

Ein vorteilhaftes Verfahren zur Herstellung eines patientenspezifischen Brackets mit einer patientenspezifischen Auflage und einem patientenspezifischen Bracketkörper kann somit in folgende Schritte unterteilt werden:
1. Herstellung einer Rohauflagenbibliothek:
   - Bereitstellen eines vorzugsweise ebenen Auflagenmaterialabschnitts,
   - Bereitstellen einer Stanze mit mindestens einem Stanzstempel zum Ausstanzen von zahnspezifischen Rohauflagen aus dem Auflagenmaterialabschnitt,
   - Ausstanzen der zahnspezifischen Rohauflagen aus dem Auflagenmaterialabschnitt mit Hilfe der Stanze,
   - optionales Vorkonfektionieren der Rohauflagen.
2. Herstellung einer Bracketkörperbibliothek:
   - Bereitstellen von Rohbracketkörpern mit einem Distanzabschnitt,
   - ggfls. Fertigen von hochpräzisen Schlitzen in den Rohbracketkörpern (bspw. mit Drahterosion),
   - Durchteilen der Distanzabschnitte mit ausgewählten Parameterwerten für die drei Parameter.
3. Erstellen eines patientenspezifischen Ziel-Set-Ups, insbesondere aus Gips, vom zu behandelnden Oberkiefer und/oder Unterkiefer eines Patienten.
4. Auswählen einer Rohauflage aus der Rohauflagenbibliothek für einen zu behandelnden Zahn des Patienten.
5. Verfüllen eines Spalts zwischen der Rohauflage und dem zugehörigen Zahn im Ziel-Set-Up mit einem Füllmaterial, insbesondere aus Kunststoff, um eine zahnspezifische Klebefläche für die Auflage herzustellen, die einen Formschluss mit dem klinischen Zahn des Patienten ermöglicht.
6. Auswählen eines Bracketkörpers aus der Bracketkörperbibliothek für jede Auflage.
7. Fixieren des Bracketkörpers an der Auflage, um das patientenspezifische Bracket zu bilden.

Die Verfahrensschritte müssen jedoch nicht in dieser Reihenfolge durchgeführt werden. So ist es bspw. möglich, alternativ zunächst die Rohauflagen 5 mit ihren zugehörigen Bracketkörpern 7 zu verbinden und erst anschließend die Klebefläche 3K zu bilden.

### Bezugszeichenliste

- 1: Bracket
- 3: Auflage
- 3K: Klebefläche der Auflage
- 5: Rohauflage
- 5m: Mesialer (Flügel-) Abschnitt einer Rohauflage
- 5d: Distaler (Flügel-) Abschnitt einer Rohauflage
- 5o: Okklusaler Abschnitt einer Rohauflage
- 5U: bukkale/linguale Umfangskontur
- 7: Bracketkörper
- 9: Rohbracketkörper
- 9d: Distanzabschnitt des Rohbracketkörpers
- 9f: Fixierabschnitt des Rohbracketkörpers
- 10: Schnittfläche
- 11: Schlitz
- 13: Haken
- 15: Flügel
- 17: Röhrchen
- 19: Rohauflagenbibliothek
- 21: Rohauflagenbehälter
- 23: Bracketkörperbibliothek
- 25: Bracketkörperbehälter
- 27: Spalt

## Patentansprüche

1. Verfahren zur Herstellung mindestens eines patientenspezifischen, modular aufgebauten Brackets (1) mit einer Auflage (3) und einem Bracketkörper (7), das die Schritte umfasst:
a) Bereitstellen einer Rohauflagenbibliothek (19) von Rohauflagen (5), wobei gleiche Rohauflagen (5) in Rohauflagenbehälter (21) der Rohauflagenbibliothek (19) gefüllt sind
b) Bereitstellen mindestens einer Bracketkörperbibliothek (23) von Bracketkörpern (7), wobei gleiche Bracketkörper (7) in Bracketkörperbehälter (25) der Bracketkörperbibliothek (23) gefüllt sind,
c) Erstellen eines patientenspezifischen Set-Ups, insbesondere aus Gips, von zu behandelnden Zähnen eines Oberkiefers und/oder eines Unterkiefers eines Patienten,
d) Auswählen einer Rohauflage (5) aus der Rohauflagenbibliothek (19) für jeden zu behandelnden Zahn des Patienten,
e) Bilden einer patientenspezifischen Klebefläche (3K) an jeder Rohauflage (5), wodurch eine Auflage (3) gebildet ist,
f) Auswählen eines Bracketkörpers (7) aus der Bracketkörperbibliothek (23) für jede Auflage (3) zur jeweiligen Verbindung mit der Auflage (3),
g) Verbinden jeder Auflage (3) mit dem zugehörigen Bracketkörper (7), wodurch ein Bracket (1) für jeden zu behandelnden Zahn des Patienten gebildet ist.

2. Verfahren nach Anspruch 1, **dadurch gekennzeichnet, dass** die Bracketkörper (7) der Bracketkörperbibliothek (23) bereitgestellt werden durch
a) Bereitstellen eines Rohbracketkörpers (9) mit einem Distanzabschnitt (9d),
b) Festlegen eines ersten Parameters zum Durchtrennen des Distanzabschnitts (9d), einem Abstand einer entstehenden Schnittfläche des Distanzabschnitts (9d) vom Schlitz (11), um eine geeignete Höhe des Bracketkörpers (7) festzulegen,
c) Festlegen eines zweiten Parameters zum Durchtrennen des Distanzabschnitts (9d), einem Schneidwinkel zu einer mesio-distalen-Achse, um einen geeigneten Torquewert des Bracketkörpers (7) festzulegen,
d) Festlegen eines dritten Parameters zum Durchtrennen des Distanzabschnitts (9d), einem Schneidwinkel zu einer okklusal-gingivalen-Achse, um einen geeigneten Rotationswert des Bracketkörpers (7) festzulegen,
e) Durchtrennen des Distanzabschnitts (9d) entsprechend der drei festgelegten Parameter, insbesondere mittels einer Säge, wodurch ein Bracketkörper (7) hergestellt ist.

3. Verfahren nach Anspruch 1 oder 2, **dadurch gekennzeichnet, dass** die Rohauflagen (5) der Rohauflagenbibliothek (19) bereitgestellt werden durch
a) Bereitstellen eines vorzugsweise ebenen Auflagenmaterialabschnitts,
b) Bereitstellen einer Stanze mit mindestens einem Stanzstempel zum Ausstanzen mindestens einer Rohauflage (5) aus dem Auflagenmaterialabschnitt,
c) Ausstanzen mindestens einer Rohauflage (5) aus dem Auflagenmaterialabschnitt mit Hilfe der Stanze.

4. Verfahren nach einem der vorangehenden Ansprüche, **dadurch gekennzeichnet, dass** die Rohbracketkörper (9) durch ein MIM- oder ein Selective-Laser-Melting-Verfahren bereitgestellt werden.

5. Verfahren nach einem der vorangehenden Ansprüche, **dadurch gekennzeichnet, dass** der Auflagenmaterialabschnitt und/oder die Rohbracketkörper (9) aus einem biokompatiblen Metall oder einer biokompatiblen Legierung, insbesondere Titan, Gold, Silber oder rostfreiem Stahl oder einer Kobalt-Chrom-Legierung, bereitgestellt wird bzw. werden.

6. Verfahren nach einem der vorangehenden Ansprüche, **dadurch gekennzeichnet, dass** das Verbinden jeder Auflage (3) mit seinem zugehörigen Bracketkörper (7) mittels Kleben oder Schweißen erfolgt.

7. Verfahren nach einem der vorangehenden Ansprüche, **dadurch gekennzeichnet, dass** das Bilden einer patientenspezifischen Klebefläche (3K) an einer Rohauflage (5) im Schritt 1e) durch Verfüllen eines Spalts (27) zwischen der Rohauflage (5) und dem zugehörigen Zahn im Set-Up mit einem Füllmaterial, insbesondere aus Kunststoff, erfolgt, um einen Formschluss der Klebefläche (3K) mit dem klinischen Zahn des Patienten zu ermöglichen.

8. Verfahren nach einem der vorangehenden Ansprüche, **dadurch gekennzeichnet, dass** mindestens zwei Parameter, insbesondere der zweite und der dritte, in den Schritten 2b) bis 2d) jeweils in einem vorbestimmten Intervall mit vorbestimmten Intervallschritten variiert werden, um die Bracketkörperbibliothek (23) zu erstellen, in der Bracketkörper (7) mit den jeweiligen verschiedenen Parameterwerten angeordnet sind.

9. Verfahren nach einem der vorangehenden Ansprüche, **dadurch gekennzeichnet, dass** im Schritt 1a) in der Rohauflagenbibliothek (19) jeweils an einen bestimmten Zahn vorkonfektionierte Rohauflagen (5) bereitgestellt werden, bspw. in mindestens einem, dem Ausstanzen folgenden Prägeschritt vorkonfektionierte, insbesondere an einen jeweiligen Zahn eines Oberkiefers und/oder eines Unterkiefers vorkonfektionierte Rohauflagen (5).

10. Verfahren nach Anspruch 9, **dadurch gekennzeichnet, dass** das Vorkonfektionieren ein Anpassen der bukkalen/lingualen Umfangskontur (5U) der mindestens einen Rohauflage (5) umfasst, um diese Umfangskontur (5U) der Rohauflage (5) an eine bestimmte Zahngröße oder -form anzupassen.

11. Verfahren nach Anspruch 9 oder 10, **dadurch gekennzeichnet, dass** das Vorkonfektionieren ein Umbiegen von ausgewählten Abschnitten einer Rohauflage (5) umfasst, insbesondere das Umbiegen von mesialen und/oder distalen Abschnitten einer Rohauflage (5), um mesiale und/oder distale Flügelabschnitte (5m, 5d) der Rohauflage (5) zu bilden, die den zugehörigen Zahn mindestens abschnittsweise umgreifen.

12. Verfahren nach einem der Ansprüche 9 bis 11, **dadurch gekennzeichnet, dass** das Vorkonfektionieren ein Umbiegen eines okklusalen Abschnitts einer Rohauflage (5) umfasst, der folgend auf dem zugehörigen Zahn okklusal aufliegt.

13. Verfahren nach einem der Ansprüche 9 bis 12, **dadurch gekennzeichnet, dass** das Vorkonfektionieren das Ausbilden von lingualen/bukkalen Protrusionen bei mindestens einer Rohauflage (5) umfasst, um es bspw. an eine linguale konkave/konvexe Struktur eines bestimmten Zahns anzupassen.

14. Verfahren nach einem der vorangehenden Ansprüche, **gekennzeichnet durch** manuelles Anpassen der im Schritt 1d) ausgewählten Rohauflage (5) an seinen zugehörigen Zahn, wobei das Anpassen ein Anpassen der Form und/oder der Größe der Rohauflage umfasst.

15. Verfahren nach einem der vorangehenden Ansprüche, **dadurch gekennzeichnet, dass** mind. zwei verschiedene Rohbracketkörper (9) bereitgestellt werden, die jeweils mindestens einem bestimmten Zahn zugeordnet sind, insbesondere acht, nämlich für jeden Zahn (1er bis 8er) einen Rohbracketkörper (9), und im Schritt 1b) die Bracketkörperbibliotheken (23) davon bereitgestellt werden.

16. Verfahren nach einem der vorangehenden Ansprüche, **dadurch gekennzeichnet, dass** die Brackets (1) in einem Malokklusionsmodell des Patienten jeweils auf ihrem zugehörigen, zu behandelnden Zahn positioniert werden und dann ein Übertragungstablett hergestellt wird, in dem die Brackets (1) in ihrer relativen Position und Stellung entsprechend der Malokklusion angeordnet sind.

## Claims

1. Process for the production of at least one patient-specific, modularly constructed bracket (1) having a pad (3) and a bracket body (7), the process comprising the steps:
a) providing a raw pad library (19) of raw pads (5), wherein same raw pads (5) are filled into raw pad containers (21) of the raw pad library (19),
b) providing at least one bracket body library (23) of bracket bodies (7), wherein same bracket bodies (7) are filled into bracket body containers (25) of the bracket body library (23),
c) generating a patient-specific set-up, in particular of gypsum, of teeth to be treated of an upper jaw and/or a lower jaw of a patient,
d) selecting a raw pad (5) from the raw pad library (19) for each tooth to be treated of the patient,
e) forming a patient-specific bonding surface (3K) at each raw pad (5), whereby a pad (3) is formed,
f) selecting a bracket body (7) from the bracket body library (23) for each pad (3) for the respective connection to the pad (3),
g) connecting each pad (3) to the corresponding bracket body (7), whereby a bracket (1) for each tooth to be treated of the patient is formed.

2. Process according to claim 1, **characterized in that** the bracket bodies (7) of the bracket body library (23) are provided by
a) providing a raw bracket body (9) having a distance section (9d),
b) defining a first parameter for cutting through the distance section (9d), which parameter is a distance of a resulting cut surface of the distance section (9d) from the slot (11), in order to define a suitable height of the bracket body (7),
c) defining a second parameter for cutting through the distance section (9d), which parameter is a cutting angle to a mesio-distal axis, in order to define a suitable torque value of the bracket body (7),
d) defining a third parameter for cutting through the distance section (9d), which parameter is a cutting angle to an occlusal-gingival axis, in order to define a suitable rotation value of the bracket body (7),
e) cutting through the distance section (9d) according to the three defined parameters, in particular by means of a saw, whereby a bracket body (7) is produced.

3. Process according to claim 1 or 2, **characterized in that** the raw pads (5) of the raw pad library (19) are provided by
a) providing a preferably plane pad material section,
b) providing a punch having at least one punching die to punch out at least one raw pad (5) from the pad material section,
c) punching out at least one raw pad (5) from the pad material section by means of the punch.

4. Process according to one of the preceding claims, **characterized in that** the raw bracket bodies (9) are provided by a MIM process or a selective laser melting process.

5. Process according to one of the preceding claims, **characterized in that** the pad material section and/or the raw bracket bodies (9) is/are provided from a biocompatible metal or a biocompatible alloy, in particular titanium, gold, silver, or non-corrosive steel, or a cobalt-chromium alloy.

6. Process according to one of the preceding claims, **characterized in that** connecting each pad (3) to its corresponding bracket body (7) occurs by gluing or welding.

7. Process according to one of the preceding claims, **characterized in that** forming of a patient-specific bonding surface (3K) at a raw pad (5) in step 1e) occurs by backfilling a gap (27) between the raw pad (5) and the corresponding tooth within the set-up with a filling material that is in particular from plastic, in order to allow for a form fit of the bonding surface (3K) to the clinical tooth of the patient.

8. Process according to one of the preceding claims, **characterized in that** at least two parameters, in particular the second and the third, in the steps 2b) to 2d) are each varied within a pre-determined interval having pre-determined interval steps in order to generate the bracket body library (23) within which bracket bodies (7) having the respective different parameter values are arranged.

9. Process according to one of the preceding claims, **characterized in that** in step 1a), raw pads (5), each pre-customized to a specific tooth, are provided within the raw pad library (19), e.g. raw pads (5) that are pre-customized in at least one embossing step following the punching out and that are pre-customized to a respective tooth of an upper jaw and/or of a lower jaw.

10. Process according to claim 9, **characterized in that** the pre-customizing encompasses fitting of the buccal/lingual perimeter contour (5U) of the at least one raw pad (5) in order to fit said perimeter contour (5U) of the raw pad (5) to a specific size or form of a tooth.

11. Process according to claim 9 or 10, **characterized in that** the pre-customizing encompasses bending of selected sections of a raw pad (5), in particular the bending of mesial and/or distal sections of a raw pad (5), in order to form mesial and/or distal wing sections (5m, 5d) of the raw pad (5) that at least sectionally encompass the corresponding tooth.

12. Process according to one of claims 9 to 11, **characterized in that** the pre-customizing encompasses bending of an occlusal section of a raw pad (5), which occlusal section subsequently occlusally rests on the corresponding tooth.

13. Process according to one of claims 9 to 12, **characterized in that** the pre-customizing encompasses forming of lingual/buccal protrusions on at least one raw pad (5) in order to e.g. fit it to a lingual concave/convex structure of a specific tooth.

14. Process according to one of the preceding claims, **characterized by** manually fitting the raw pad (5) selected in step 1d) to its corresponding tooth, wherein the fitting encompasses fitting of the form and/or of the size of the raw pad (5).

15. Process according to one of the preceding claims, **characterized in that** at least two different raw bracket bodies (9) are provided that are each assigned to at least one specific tooth, in particular eight, namely one raw bracket body (9) for each tooth (1^{st} to 8^{th}), and in step 1b) the bracket body libraries (23) thereof are provided.

16. Process according to one of the preceding claims, **characterized in that** the brackets (1) within a malocclusion model of the patient are each positioned on their corresponding tooth to be treated, and then a transfer tray is produced within which the brackets (1) are arranged in their relative places and positions according to the malocclusion.

## Revendications

1. Procédé de fabrication d'au moins un bracket (1) patient-spécifique de structure modulaire avec un support (3) et un corps de bracket (7), qui comprend les étapes :
a) Fourniture d'une bibliothèque à supports bruts (19) de supports bruts (5), les mêmes supports bruts (5) étant remplis dans des récipients à supports bruts (21) de la bibliothèque à supports bruts (19)
b) Fourniture d'au moins une bibliothèque à corps de bracket (23) de corps de bracket (7), les mêmes corps de bracket (7) étant remplis dans des récipients à corps de bracket (25) de la bibliothèque à corps de bracket (23),
c) Création d'un set-up patient-spécifique, en particulier en gypse, de dents à traiter d'une mâchoire supérieure et/ou d'une mâchoire inférieure d'un patient,
d) Sélection d'un support brut (5) dans la bibliothèque à supports bruts (19) pour chaque dent à traiter du patient,
e) Formation d'une surface adhésive (3K) patient-spécifique sur chaque support brut (5), formant ainsi un support (3),
f) Sélection d'un corps de bracket (7) dans la bibliothèque à corps de bracket (23) pour chaque support (3) pour la fixation respective au support (3),
g) Fixation de chaque support (3) au corps de bracket (7) correspondant, formant ainsi un bracket (1) pour chaque dent à traiter du patient.

2. Procédé selon la revendication 1, **caractérisé en ce que** les corps de bracket (7) de la bibliothèque à corps de bracket (23) sont fournis par
a) Fourniture d'un corps de bracket brut (9) avec une section d'espacement (9d),
b) Détermination d'un premier paramètre pour sectionner la section d'espacement (9d), une distance entre une surface de coupe résultante de la section d'espacement (9d) et la fente (11), afin de déterminer une hauteur adaptée du corps de bracket (7),
c) Détermination d'un deuxième paramètre pour sectionner la section d'espacement (9d), un angle de coupe par rapport à un axe mésio-distal, afin de déterminer une valeur de couple adaptée du corps de bracket (7),
d) Détermination d'un troisième paramètre pour sectionner la section d'espacement (9d), un angle de coupe par rapport à un axe occlusal-gingival, afin de déterminer une valeur de rotation adaptée du corps de bracket (7),
e) Sectionnement de la section d'espacement (9d) selon les trois paramètres déterminés, en particulier au moyen d'une scie, fabriquant ainsi un corps de bracket (7).

3. Procédé selon la revendication 1 ou 2, **caractérisé en ce que** les supports bruts (5) de la bibliothèque à supports bruts (19) sont fournis par
a) Fourniture d'une section de matériau de support préférentiellement plate,
b) Fourniture d'une presse de poinçonnage avec au moins un poinçon pour découper au moins un support brut (5) dans la section de matériau de support,
c) Découpage d'au moins un support brut (5) dans la section de matériau de support à l'aide de la presse de poinçonnage.

4. Procédé selon l'une des revendications précédentes, **caractérisé en ce que** les corps de bracket bruts (9) sont fournis par un procédé MIM ou de fusion sélective par laser.

5. Procédé selon l'une des revendications précédentes, **caractérisé en ce que** la section de matériau de support et/ou les corps de bracket bruts (9) sont fournis en un métal biocompatible ou un alliage biocompatible, en particulier le titan, l'or, l'argent ou l'acier inoxydable ou un alliage cobalt-chrome.

6. Procédé selon l'une des revendications précédentes, **caractérisé en ce que** la fixation de chaque support (3) à son corps de bracket (7) correspondant s'effectue par collage ou soudage.

7. Procédé selon l'une des revendications précédentes, **caractérisé en ce que** la formation d'une surface adhésive (3K) patient-spécifique sur un support brut (5) à l'étape 1e) s'effectue par le remplissage d'un écart (27) entre le support brut (5) et la dent correspondante dans le set-up d'un matériau de remplissage, en particulier en matière plastique, afin de permettre un blocage mécanique de la surface adhésive (3K) avec la dent clinique du patient.

8. Procédé selon l'une des revendications précédentes, **caractérisé en ce qu'**au moins deux paramètres, en particulier le deuxième et le troisième, sont respectivement variés aux étapes 2b) à 2d) dans un intervalle prédéterminé avec des étapes d'intervalle prédéterminées, afin de créer la bibliothèque à brackets de corps (23), dans laquelle des corps de bracket (7) sont disposés avec les différentes valeurs de paramètre respectives.

9. Procédé selon l'une des revendications précédentes, **caractérisé en ce que**, à l'étape 1a), des supports bruts (5) préfabriqués sur une dent spécifique sont respectivement fournis dans la bibliothèque à supports bruts (19), par exemple des supports bruts (5) préfabriqués à au moins une étape d'estampage suivant le découpage, en particulier des supports bruts (5) préfabriqués sur une dent particulière d'une mâchoire supérieure et/ou d'une mâchoire inférieure.

10. Procédé selon la revendication 9, **caractérisé en ce que** la préfabrication comprend une adaptation du contour circonférentiel (5U) buccal/lingual d'au moins un support brut (5), afin d'adapter ce contour circonférentiel (5U) du support brut (5) à une taille ou forme de dent spécifique.

11. Procédé selon la revendication 9 ou 10, **caractérisé en ce que** la préfabrication comprend un pliage de sections sélectionnées d'un support brut (5), en particulier le pliage de sections mésiales et/ou distales d'un support brut (5), afin de former des sections d'ailette mésiales et/ou distales (5m, 5d) du support brut (5), qui enserrent la dent correspondante au moins par sections.

12. Procédé selon l'une des revendications 9 à 11, **caractérisé en ce que** la préfabrication comprend un pliage d'une section occlusale d'un support brut (5), qui repose par la suite sur la dent occlusale correspondante.

13. Procédé selon l'une des revendications 9 à 12, **caractérisé en ce que** la préfabrication comprend la formation de protrusions linguales/buccales sur au moins un support brut (5), afin de l'adapter, par exemple, à une structure concave/convexe linguale d'une dent spécifique.

14. Procédé selon l'une des revendications précédentes, **caractérisé par** une adaptation manuelle du support brut (5) sélectionné à l'étape 1d) à sa dent correspondante, l'adaptation comprenant l'adaptation de la forme et/ou de la taille du support brut.

15. Procédé selon l'une des revendications précédentes, **caractérisé en ce qu'**au moins deux différents corps de bracket bruts (9) sont fournis, qui sont respectivement associés à au moins une dent spécifique, en particulier huit, notamment pour chaque dent (1 à 8) un corps de bracket brut (9), et les bibliothèques à corps de bracket (23) en sont fournies à l'étape 1b).

16. Procédé selon l'une des revendications précédentes, **caractérisé en ce que** les brackets (1) sont respectivement positionnés dans un modèle de malocclusion du patient sur leur dent à traiter correspondante et puis un plateau de transfert est fabriqué, dans lequel les brackets (1) sont disposés dans leur position et leur place relatives selon la mal occlusion.
